# EUROPEAN PATENT APPLICATION

(11) **EP 4 357 179 A1**
(43) Date of publication of application: **24.04.2024**
(21) Application number: 22202270.9
(22) Date of filing: 18.10.2022
(51) Int. Cl.: B60K 1/04, H01M 10/625, B60L 50/64, B64D 27/24, B64D 45/00, H01M 10/6556, H01M 50/143, H01M 50/24, H01M 50/249

(54) **BATTERY CELL ARRANGEMENT**

(71) Applicant: Volocopter GmbH, 76646 Bruchsal (DE)
(72) Inventor: Georgiadis, Kyriakos, 76227 Karlsruhe (DE)
(74) Representative: LBP Lemcke, Brommer & Partner Patentanwälte mbB

(57) **Abstract**

We describe a battery cell arrangement (1) for use in an aircraft, comprising: a plurality of battery cells (2); at least one battery housing (3) enclosing said plurality of battery cells (2), said housing (3) having an opening (3a); and
a number of separating elements (4) that are located inside said battery housing (3), for separating individual battery cells (2) from each other; wherein each battery cell (2) is associated with a respective vent channel (5), which vent channels (5) open to said opening (3a); said vent channels (5) define a number of battery cell compartments, each of said compartments holding a subset of said plurality of battery cells (2) and each of said compartments being closed by a cover element (6), which cover element (6) is devised to open if a battery cell (2) in a corresponding compartment goes into thermal runaway and produces gaseous venting products (GP). Further described is an aircraft having such a battery cell arrangement.

## Description

The invention relates to a battery cell arrangement comprising a plurality of battery cells and at least one battery housing enclosing said plurality of battery cells, according to claim 1.

The invention also relates to an aircraft, in particular an electrically propelled aircraft, comprising such a battery cell arrangement.

Battery cells, such as lithium-ion battery cells, can go into thermal runaway due to external influences or internal faults, during which they may release large amounts of heat, gases and debris. In order to relieve the pressure due to the released gas and to reduce damage to other components, a venting system is used in battery systems or battery cell arrangements to channel any flames, gases and debris to the outside of the battery system in a controlled way.

In the automotive (car) industry, where large electric propulsion batteries are commonly used, a battery pack comprising the batteries usually is installed in a single big housing. Internally, the battery pack is divided into smaller modules for electrical and manufacturing reasons. Since available space is limited in the vehicle, one of the key design drivers is minimizing the volume of the battery pack, i.e., the housing and the battery modules. In addition, environmental sealing of the battery pack is extremely important.

On the other hand, in the automotive industry, safety in case of thermal runaway has not been the highest priority until now, as long as enough time is given to the passengers to evacuate the vehicle in case of an incident. This leads to battery designs where the battery cells are packed tightly and minimal free air volume is provided inside the battery pack, in order to reduce the overall size of the battery pack. A venting path inside the battery pack for evacuating any gaseous substances is dimensioned to allow individual battery cells to vent through, and the battery housing is hermetically sealed except for dedicated venting ports that allow gases to exit the housing of the battery pack. Due to space constraints, the venting products of a cell come in direct contact with other battery cells and battery cell modules on their way to the venting ports, which will have a negative effect on said other battery cells.

A typical prior art battery pack thus has a sealed housing to prevent any gases or flames from coming out of the battery pack and from damaging surrounding components. Gases and flames can only exit the sealed housing through one or more dedicated vents. Internally, the gasses and flames from a burning battery cell can move through any unoccupied space inside the battery pack to the vents, which can produce the negative side-effects as mentioned above.

Furthermore, in order to withstand the gas pressure inside the battery pack, the housing must be very strong and the sealing between the housing components extremely heat resistant, to prevent any gas leakage during the entire battery fire event. This entails rather heavy and costly designs.

As explained above, according to the prior art, gases and flames, as well as burning and/or electrically conductive material expelled from the battery cells (i.e., debris) can come in contact with neighbouring healthy battery cells and cause them to also go into thermal runaway. The hot gases may heat up said neighbouring battery cells and the ejected materials may potentially cause short circuits, thereby drastically increasing the risk of the fire propagating to other healthy battery cells (hereinafter also simply referred to as "cells"). Potting or other forms of encapsulation could be used to protect the neighbouring cells from such effects, but this would further increase manufacturing complexity and weight of the battery pack.

In aviation, the main design drivers for battery arrangements are safety and battery weight, instead of volume as in automotive applications. Instead of a single big battery pack, an aircraft's propulsion battery is typically split into multiple smaller, independent battery packs to ensure continued operation if a faulty condition occurs in one of them. In addition, more free space is available around these battery packs in the aircraft fuselage in order to provide a required physical separation. Known automotive-type battery designs are therefore not optimal for these different conditions and requirements of aviation propulsion batteries.

Additionally, in the aviation industry battery systems must fulfil much higher safety standards regarding fire protection than in other fields of industry where batteries, especially lithium batteries, are used. Therefore, better methods to safely deal with the cell venting products are needed.

One requirement is that when at least two adjacent cells are in thermal runaway, propagation of fire to any other cell must be prevented. In order to achieve this, the thermal input from the burning cells to the neighbouring cells must be minimized.

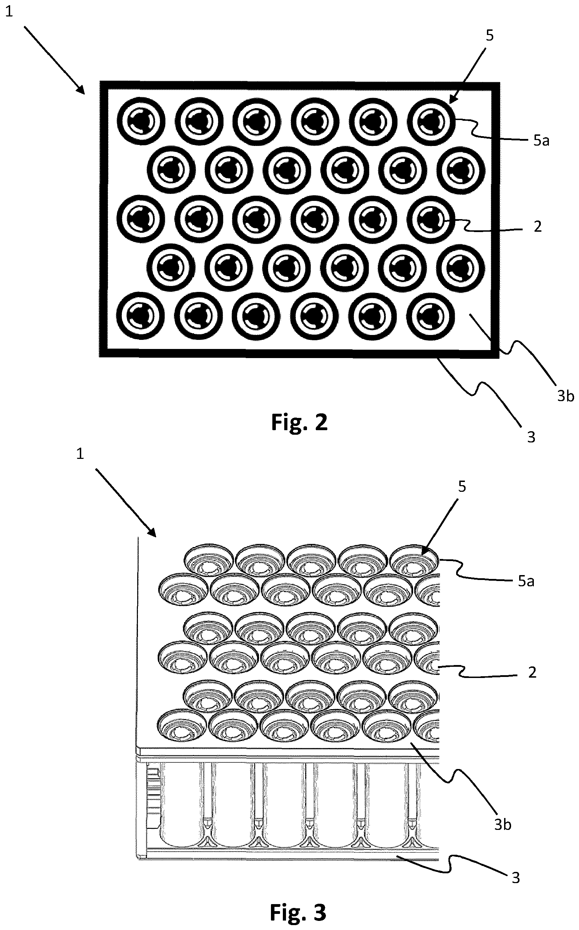

US 2020/0317357 A1 discloses different designs of a battery cell arrangement for use in aircraft. According to Figures 3 through 5 an airflow passes through the entire battery cell pack, so that gases from a burning battery cell can be vented. By using said airflow through the cell pack to remove combustion products, said products may come in contact with well-functioning battery cell in the pack or arrangement, which may have a negative impact on said cells, as already explained.

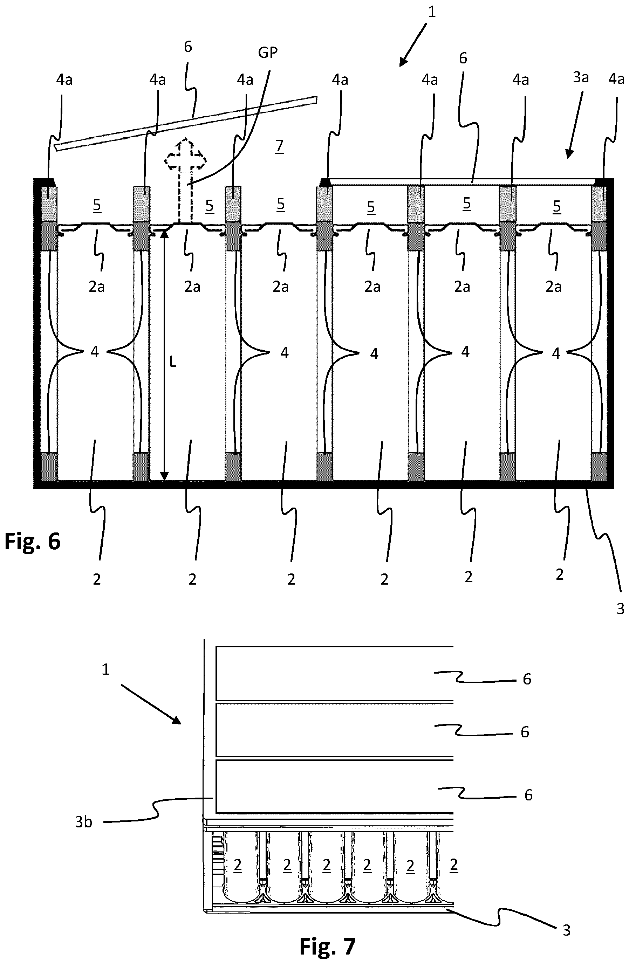

According to the design in Figure 6A, there is no airflow between individual battery cells. Instead, this design proposes a top cover that is removable in case of fire. Until said cover is blown, all venting products come in contact with the other cells in the pack, which may have a negative impact on said other cells.

Another requirement is that the battery system must safely manage the effects of 15-20% of the cells in a battery pack being in thermal runaway, without adverse effects to the aircraft. If a large number of cells go simultaneously into thermal runaway and release large volumes of gas in a short amount of time, this leads to considerable overpressure inside the battery pack. In order to handle this overpressure without uncontrolled leakage to other areas of the aircraft, a housing or enclosure of the battery pack usually must be significantly strengthened, which can lead to significant weight increase that need to be avoided in the context of aviation.

It is the object of the invention to provide a battery cell arrangement, especially for use in an aircraft, which complies with both said requirements while keeping any weight increase at a minimum. Another object is to provide an aircraft which is particularly safe to use.

This object is achieved by means of a battery cell arrangement as defined in claim 1 and by means of an aircraft as defined in claim 15.

Advantageous further embodiments of the invention are defined in the dependent claims.

According to the invention, a battery cell arrangement comprises: a plurality of battery cells; at least one battery housing (which is preferably gas-tight) enclosing said plurality of battery cells, said housing having an opening; and a number of separating elements that are located inside said battery housing for separating individual battery cells from each other; wherein each battery cell is associated with a respective vent channel, which vent channels open to said opening; said vent channels define a number of battery cell compartments, each of said compartments holding a subset of said plurality of battery cells and each of said compartments being closed by a cover element, which cover element is devised to open, e.g., to be ejected or destroyed, if a battery cell in a corresponding compartment goes into thermal runaway and produces gaseous venting products.

This implies that each battery cell is associated with a vent channel. However, this does not mean that every battery cell necessarily has its own individual vent channel, as a plurality of battery cells can share a (common) vent channel.

The term "battery cell compartment" or "compartment" is used to designate a subset of the battery cells, the associated vent channel(s) of which are closed by a common cover element.

An aircraft according to the invention has at least one such battery cell arrangement, especially for electrically powering its propulsion units or devices.

Applicant has found that compliance with both said requirements is possible, if each battery cell compartment has a dedicated venting provision (i.e., said associated vent channel(s)) that guides the venting products out of the housing. In this case, no venting products come in contact with cells in other compartments of the battery arrangement (hereinafter also referred to as "battery pack"), and in addition, a potentially much larger free air volume outside of the housing can be used to vent into, eliminating the problem of overpressure inside a confined battery housing space.

In the context of the present invention, a common venting path inside the battery pack to a central venting port is eliminated, providing individual separated venting paths or vent channels for each battery cell compartment in the battery pack instead. Using this approach, the higher aviation fire safety standards can be fulfilled without excessive weight increase.

Fire-resistant, preferably electrically isolating and/or structural components of the battery pack can be formed so as to separate each cell venting area (i.e., each vent channel) from other cells, and to guide the vented gases, flames and debris away from other cells and out of the battery pack. Preferred examples of materials from which the vent channels can be formed comprise organic structural foams with fire resistant/retardant properties or cork for low weight, inorganic (e.g., ceramic) foams or aerogels when higher fire resistance is required, or inorganic bulk material with low heat conductivity (e.g., vermiculite or glass/ceramic fiber plates) if higher structural stability is needed. A depth of the venting channels above the cell pole, i.e., a thickness of these materials, should preferably be below 10 mm to prevent clogging and reduce weight, and if possible less than 5 mm.

For cylindrical cells, according to one embodiment, free venting can be achieved by creating a preferably round hole, which (venting) hole is preferably not smaller in size than a corresponding battery cell, i.e., a battery cell located at said hole. For a cylindrical battery cell, a diameter of the hole should be no less than a diameter of the cylindrical cell. More preferably, said hole is located just above the venting valve of a given cell, e.g., above the positive and/or negative pole of the cell.

Said hole can be closed by a disk, a sheet or other suitable means to provide environmental sealing for the cell and the battery pack. These disks, also referred to as burst disks or burst caps, are preferably made out of fire-resistant material like metal, glass or ceramic, in order to withstand the external flames from a venting cell. Instead of disks, these materials can be applied also in the form of sheets with grooves or perforations in areas above the cell poles that create predetermined breaking points. The sheet form reduces installation and sealing effort, as one sheet can contain individual predetermined breaking points for multiple cells.

The disks or sheets preferably are designed to burst at less than 5 bar, preferably less than 2 bar of internal pressure to release the cell venting products, but also to withstand at least 5 bar, preferably at least 10 bar, of external pressure to withstand physical handling of the battery pack. This can be done by selecting a thickness and a material for/of the disk or sheet that is/are appropriate for these pressures, and by providing support of the disk or sheet on the battery pack internal side, e.g. by using an appropriate step groove or bevel/chamfer at an interface between the disk/sheet and said venting hole, or by providing internal support structures directly below the sheet material, so the disks or sheets are easy to press out during a venting event, but difficult to press in due to external forces.

In a highly advantageous embodiment, a sheet in the form of a thin metal sheet (e.g., aluminium, copper, steel or titanium of less than 0.03mm thickness) is combined with a fire-resistant rigid burst disk or cap. The thin metal sheet or foil provides the ability to rip at less than 2 bar of internal pressure without complicated forming or pre-grooving, opening the previously environmentally sealed venting channel. The burst disk or cap only protects the metal foil and the cell below from external mechanical damages, but is only loosely attached to the housing of the battery pack or the metal foil, being therefore easily ejected during a cell venting event.

When a cell goes into thermal runaway, said disk, sheet or combination thereof, as well as any internal sheet supporting structures, can be ejected or perforated or otherwise destroyed, and the thermal runaway products can be released. Since there is no possibility for venting products to accumulate within the battery pack, any overpressure is safely avoided, so that the housing can be devised in thin and lightweight fashion.

The same concept can be used for other cell formats. Prismatic cells, for instance, also have a well-defined venting area, like cylindrical cells, so the battery pack can be designed in a way to channel the venting products coming out of each cell vent to the outside of the battery pack. The concept for forming individual cell venting channels and the materials used are the same as for cylindrical cells.

For pouch cells, which may not have a well-defined venting area, each cell can be enclosed in an additional frame that is designed to collect the venting products wherever they come out of the cell, and then guide them out of the battery pack without coming in direct contact with other cells.

In order to ensure that no other aircraft components are affected by the cell venting products, the battery housing can be advantageously placed in an additional gas-tight compartment or container inside the aircraft, said container having at least one dedicated venting port. In this way, a much larger free air volume can be provided around the battery housing for the cells to vent into than would be possible with a sealed battery housing with only one venting port. Thus, any overpressure due to the individual cell venting products will be much smaller for said (larger) container than for a relatively small sealed battery pack housing.

Multiple battery packs can share the same free air volume, i.e., the same container to vent into, thus significantly reducing the container volume compared to the alternative, in which each sealed battery pack provides an equivalent free air volume to reduce the overpressure on battery pack level. In addition, because the venting products impact much more uniformly the much larger surface of the container, heat flux on said container is quite low. Accordingly, thermal protection and isolation of the container is much easier to achieve compared to a sealed battery pack housing, where the venting products impact a relatively small area of the sealed battery pack housing, leading to high heat flux and corresponding problems with thermal protection of the housing material.

Depending on the type of cells used and an intensity of heat output, it may not be necessary to vent each cell individually. Based on the same principle of venting into a much larger common space, in a highly preferred embodiment, the battery pack or battery arrangement can be divided into compartments. Each compartment, which can be hermetically sealed from the other compartments in the same battery pack, provides a common cover element for all cells of the compartment, which cover element is easily opened (e.g., perforated or ejected) when one cell inside the compartment goes into thermal runaway, thus allowing this particular cell to vent freely into the open space of the battery container.

While the other cells covered by the same perforated or ejected cover element can be affected by the venting products of the failed cell, if in another embodiment a surface of the other cells in the same compartment is additionally protected by using, e.g., silicone potting or similar non-conductive thermally isolating potting compounds, this approach also prevents direct contact of the cells in the battery pack with the venting products of the failed cell, and decreases required overpressure resistance of the housing. Depending on the sensitivity of the cells to the (reduced) impact of venting products on them, the number of cells in a compartment can be reduced or increased in order to achieve optimum fire propagation resistance and battery pack weight. In the extreme, the compartment size is reduced to a single cell, so that every cell has its own vent channel and its own cover element, as described previously.

The following embodiments have been found to be particularly advantageous:
In one embodiment of the battery cell arrangement according to the invention a number of battery cells in at least one subset is equal to one.

In this way, each cell has its own separate vent channel and negative effects on neighbouring cells can be safely avoided.

In another embodiment of the battery cell arrangement according to the invention a plurality of said vent channels are closed by a common cover element.

This can help to achieve a simpler design and thus reduce manufacturing costs while maintaining separate venting areas for at least some or preferably all of the individual battery cells.

As stated before, such a common cover element defines a corresponding battery cell compartment. However, there can be more than one vent channel per compartment. In particular, each cell in the compartment can have a separate vent channel.

In yet another embodiment of the battery cell arrangement according to the invention at least some of said separating elements are devised for guiding gaseous venting products of the battery cells towards said vent channels.

This can achieve a synergetic effect by using said separating elements also as guide elements for guiding said gaseous venting products.

In this context, in a preferred further embodiment of the battery cell arrangement according to the invention at least some of said separating elements have extensions that form said vent channels and are thus devised for guiding gaseous venting products of the battery cells.

Said extensions can be separate from said separating elements or they can be integrally formed therewith, thus reducing a required number of parts.

If the separating elements and the vent channel forming elements are devised as separate components one can advantageously adjust the respective material properties needed for each function independently.

In a further embodiment of the battery cell arrangement according to the invention said separating elements and/or said vent channels are made of a fire-resistant or thermally insulating material.

This increases safety of the battery arrangement since said elements will be able to resist longer in the case of a thermal runaway to ensure continued venting and/or to enable secure landing of the aircraft prior to any catastrophic event.

In yet a further embodiment of the battery cell arrangement according to the invention the housing is located inside a gas-tight container, said container having at least one venting port.

As stated before, said container may advantageously provide additional free air volume, thus reducing excess pressure on individual cells or groups of cells, and may serve to evacuate any gaseous products etc. safely to an outside of the aircraft without impacting other components of the aircraft.

In one corresponding embodiment of the battery cell arrangement according to the invention said container thus comprises a free air volume at least in a region around said housing. More than one housing (with corresponding battery cells therein) can be arranged in such a container.

In one other corresponding embodiment of the battery cell arrangement according to the invention said venting port is located in a side wall of said container, said side wall facing away from said opening in the housing.

In this way, any gaseous products will first fill the container in essentially homogenous fashion, thus reducing (excess) pressure, before leaving the container through said venting port.

In a preferred embodiment of the battery cell arrangement according to the invention said cover element is a sheet, a disk, a foil or the like, preferably made of metal, ceramic or glass.

This ensures a reliable opening (by detaching, perforating, ejecting, bursting, melting or otherwise destroying) of the cover element in the event of a thermal runaway.

In one other advantageous embodiment of the battery cell arrangement according to the invention a venting area of the cells (e.g., an area around the positive pole of the cell for cylindrical cells) is additionally covered by silicone or similar non-conductive thermally isolating potting compounds to thermally and/or mechanically shield said subset of battery cells from any neighbouring battery cells.

This measure can further enhance the resistance of the proposed battery arrangement in the event of a thermal runaway, especially when a common cover element is used for multiple cells.

In a highly advantageous embodiment of the battery cell arrangement according to the invention said battery cells are cylindrical cells and said vent channel comprises a circular opening, said battery cells preferably facing said circular opening with their respective cell poles that include the cell venting mechanism.

Such cells are of a common type thus reducing manufacturing costs. Typically, such cells comprise a venting valve in a region of the positive pole or terminal. Thus, with the proposed orientation, venting can be improved.

It falls within the scope of the present invention to use cells that have a venting valve (also) in a region of their negative terminal, provided that they are oriented as stated above. the described methods (i.e., forming of venting channels and corresponding cover elements) can also be applied to a negative terminal venting valve.

In still another embodiment of the battery cell arrangement according to the invention said battery cells are prismatic cells or pouch cells.

In this context, especially when using pouch cells, in order to efficiently guide the venting products toward the vent channels, said separating elements or said additional protecting elements can have a form that captures or collects said venting products and directs them in a direction of said vent channels.

As already mentioned above, in yet another embodiment of the battery cell arrangement according to the invention a plurality of housings with corresponding battery cells are arranged in one common container that is gas-tight towards other areas of the aircraft, but provides a venting opening towards the exterior of the aircraft.

In this way, all of said housings and their respective battery cells can profit from or share a relatively large free air volume provided by said container without overmuch increasing the weight.

Additional features and advantages of the invention will become apparent from the following description of preferred embodiments of the invention with references to the drawings.
Figure 1 shows a section through a battery cell arrangement according to the invention;
Figure 2 shows a top view of the battery cell arrangement according to Figure 1 without cover elements;
Figure 3 shows a perspective view of the battery cell arrangement according to Figure 2;
Figure 4 shows a top view of the battery cell arrangement according to Figure 1 with cover elements;
Figure 5 shows a perspective view of the battery cell arrangement according to Figure 4;
Figure 6 shows a section through another battery cell arrangement according to the invention;
Figure 7 shows a perspective view of the battery cell arrangement according to Figure 6;
Figure 8 schematically shows an aircraft with a further embodiment of the battery cell arrangement according to the invention;
Figures 9a and 9b show further details of embodiments of a battery cell arrangement according to the invention;
Figures 10a through 10c show further details of another embodiment of a battery cell arrangement according to the invention; and
Figures 11a through 11e show further details of yet another embodiment of a battery cell arrangement according to the invention.

In all figures, the same reference signs denote the same or at least identically acting elements.

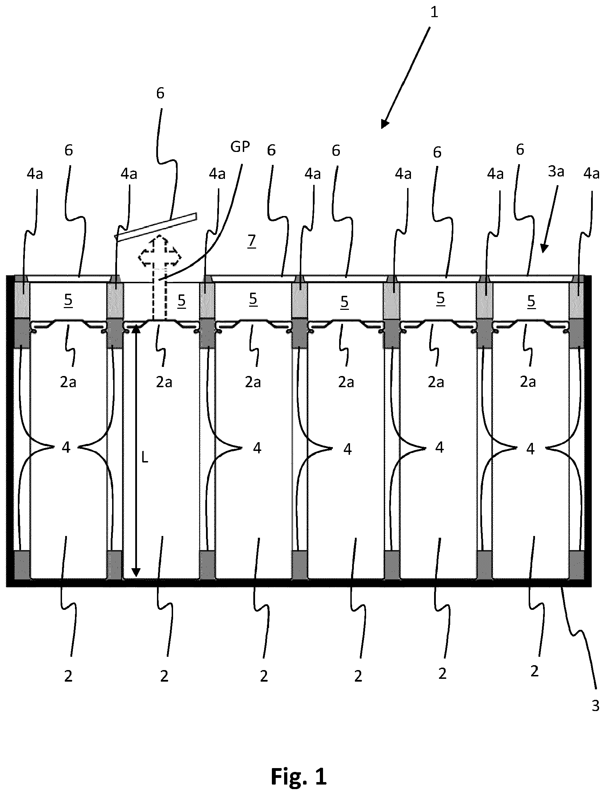

Figure 1 shows a section through a battery cell arrangement according to the invention. The battery cell arrangement as a whole is designated by the reference sign 1. It comprises a plurality of battery cells 2, which are in the form of cylindrical cells or rod-shaped cells. However, the invention is not limited to the use of such battery cells 2. The battery cells 2 are arranged in rows and columns with parallel longitudinal axes. The electrical positive pole 2a of the respective battery cells 2 is located in the upper part of the drawing. The battery cells 2 have a degassing valve in the area of said positive pole 2a, which is not shown explicitly in the drawings. In the event of a thermal runaway, gaseous products and other substances can escape into the environment through said degassing valve, which is symbolised in Figure 1 by a dashed arrow GP.

The battery cells 2 are arranged inside a preferably gas-tight housing 3, which housing 3 has an opening 3a on one side (cf. the upper side in Figure 1). Between the individual battery cells 2 there are separating elements 4 which ensure a defined arrangement and lateral clearance of the individual battery cells 2. Preferably, although not shown in Figure 1, said separating elements 4 (or additional protecting elements, e.g., potting elements - not shown) extend over an entire length L of the battery cells 2 and can thermally shield them from each other.

In the area of said positive poles 2a, the separating elements 4 have axial extensions 4a which are preferably, but not necessarily, separate from the separating elements 4 and which form between them so-called vent channels 5 in axial prolongation of the individual battery cells 2. These vent channels 5 are designed and intended to discharge the gaseous products GP escaping from the venting valve of a given battery cell 2 through the opening 3a of the housing 3.

The axial extensions 4a visible in Figure 1 are accordingly also found in a sectional plane perpendicular to the sectional plane in Figure 1, so that the vent channels 5 are preferably circumferentially closed and ensure a defined discharge of the gaseous products GP from the individual battery cells 2 in the direction of the opening 3a of the housing 3.

As can be seen from Figure 1, the individual vent channels 5 in the area of the opening 3a of the housing 3 are individually closed off from the environment 7 by cover elements 6. In this way, in the context of the invention each battery cell 2 can be said to be placed in a separate battery cell compartment. Advantageously, the axial extensions 4a extend all the way to said cover elements 6. The cover elements 6 are designed or connected to the vent channels 5 in such a way, e.g., by means of suitable adhesives, that if gaseous products GP escape from a given battery cell 2, the associated cover element 6 is ejected or perforated or destroyed in order to specifically allow the escape of the gaseous products GP without neighbouring battery cells 2 being affected, in particular thermally. This is explicitly shown in connection with arrows GP in Figure 1.

Figure 2 shows a top view of the design according to Figure 1, but without the said covering elements 6 (cf. Figure 1) in the area of the vent channels 5. As can be seen from Figure 2, the vent channels 5 are designed with a circular cross-section in accordance with the shape of the individual battery cells 2 by means of respective circular openings 5a in a housing cover 3b arranged in a region of said opening 3a (cf. Figure 1). Note that said housing cover 3b and said axial extensions 4a (cf. Figure 1) can be embodied by a single construction element. The battery cells 2 are arranged in a plurality of rows, with adjacent rows being laterally displaced with respect to each other, as shown. However, the invention is not limited to such geometries - neither regarding the battery cells 2 nor regarding the vent channels 5 or the cover elements 6.

Figure 3 shows a further representation of the embodiment according to Figure 1 in a perspective, partly cutaway view, also without the cover elements mentioned.

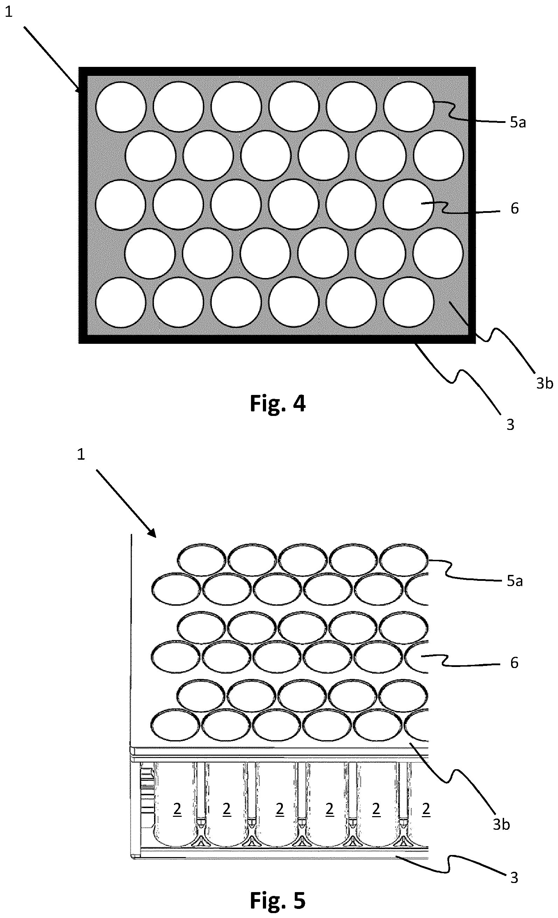

Figure 4 shows a top view corresponding to Figure 2, this time with (circular) cover elements 6 in the area of each individual vent channel 5.

Figure 5 shows a corresponding representation in perspective, partly cutaway view.

The invention is not limited to the fact that each battery cell 2 must have its own individual vent channel 5 with its own individual cover element 6. In particular, Figure 6 shows an arrangement in which a plurality of battery cells 2 (in this case at least three battery cells 2 arranged next to each other), each of which has its own vent channel 5, have a common cover element 6, which cover element 6 is ejected in the event of thermal runaway. In this way, in the context of the invention, said three battery cells 2 can be said to be placed in a common battery cell compartment.

Although not shown in Figure 6, the axial extensions 4a need not be present between the battery cells 2 within a given compartment. However, their presence reduces a possible negative impact that a runaway cell may have on the other cells in the compartment. Advantageously, the axial extensions 4a extend all the way to said cover elements 6 (cf. Figure 1).

According to the illustration in Figure 7, with corresponding further development, entire rows of battery cells 2 can also each have a common strip-like cover element 6. The invention is, however, neither limited with regard to the number of battery cells 2 with a common cover element 6 (i.e., without a respective compartment) nor with regard to their geometrical arrangement(s) or shape(s).

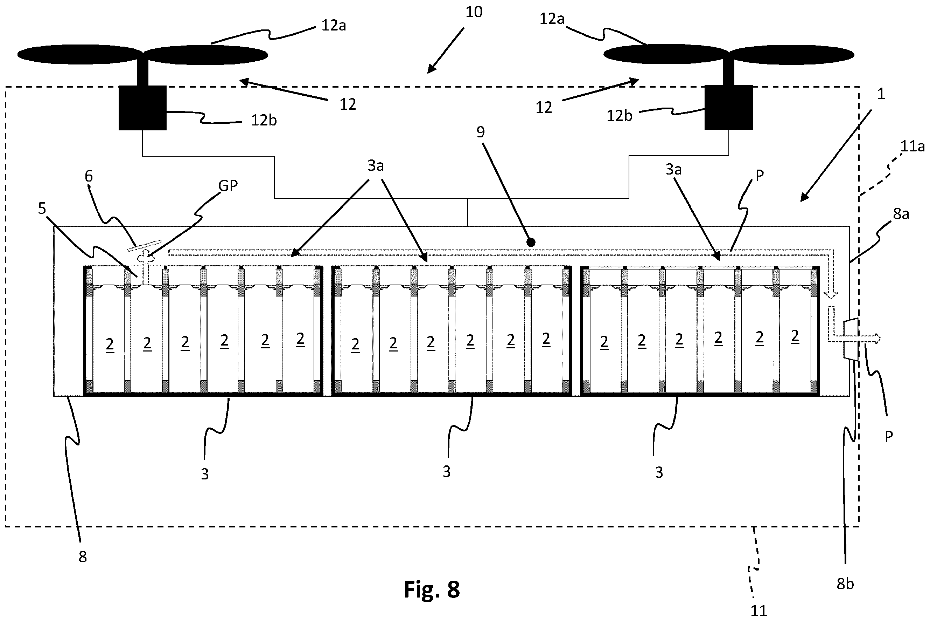

Figure 8 shows a further embodiment of the battery cell arrangement 1 according to the invention in a schematically depicted aircraft 10. Reference character 11 denotes a fuselage of the aircraft. The battery cell arrangement 1 has several groups of battery cells 2, each of which is arranged in its own gas-tight housing 3 (cf. Figure 1). These groups of battery cells 2 or the individual housings 3 are arranged within a larger pressure-resistant container 8, in which container 8 a relatively large free air volume 9 is defined, into which the individual battery cells 2 can degas or vent in the event of thermal runaway through their associated vent channel 5 after ejection of the respective cover element 6. The container 8 has a vent port or vent valve 8b in a side wall 8a, through which excess pressure can escape from the container 8. The vent port 8b is advantageously arranged in or connected to an outer wall 11a of the fuselage 11 of the aircraft 10 so that the excess pressure can be discharged from the aircraft 10 (cf. the arrows P in Figure 8).

In this context, the detailed design of the vent channels 5 and cover elements 6 is not limited to the embodiment of Figure 1.

As further shown schematically in Figure 8, the battery cell arrangement 1 can be used, inter alia, to power electric propulsion units 12 of the aircraft 10. Two of such propulsion units 12 are exemplarily shown in Figure 8 in the form of propellers or rotors 12a, each with an associated electric motor 12b. The electric motor 12b is in each case electrically connected to the battery cell arrangement 1. However, the invention is not limited to such use.

For reasons of clarity, any control units or battery management systems (BMS), which are regularly also present, are not shown.

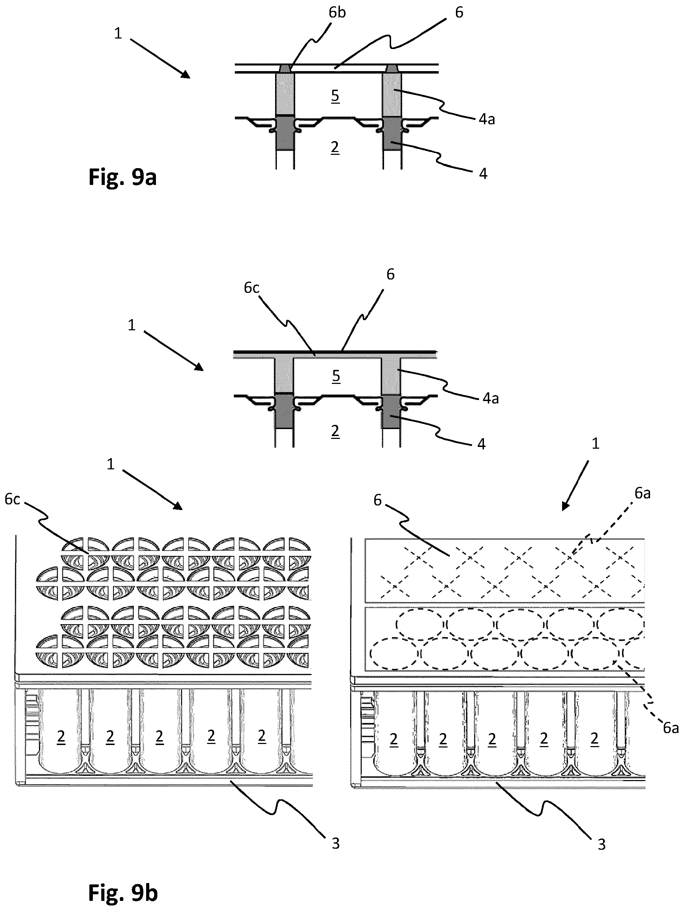

Figures 9a and 9b show details from further embodiments of the invention. According to Figure 9a, the vent channels 5 can be closed by a respective disk-shaped cover element 6. Alternatively, a sheet or any other suitable means can be employed to provide environmental sealing for the battery cell 2 and the entire battery pack 1. The shown disks 6, also referred to as burst disks, are preferably made out of fire-resistant material like metal, glass or ceramic, in order to withstand the external flames from a venting cell.

Instead of forming or applying the materials in the form of disks, said materials can also be applied as cover elements 6 in the form of sheets (cf. Figure 7) with grooves or perforations in areas above the cell poles that create predetermined breaking points. The sheet form reduces installation and sealing effort, as one sheet can contain individual predetermined breaking points for multiple cells. This is shown in Figure 9b, bottom right, where reference numeral 6a denotes said grooves or perforations, which can take any suitable form (e.g., circles or crosses).

The disks or sheets preferably are designed to burst at less than 5 bar, preferably less than 2 bar of internal pressure to release the cell venting products, but also to withstand at least 5 bar, preferably at least 10 bar, of external pressure to withstand physical handling of the battery pack. This can be done by selecting a thickness and a material for/of the disk or sheet that is/are appropriate for these pressures, and by providing support of the disk or sheet on the battery pack internal side, e.g., by using an appropriate step groove or bevel/chamfer 6b at an interface between the disk/sheet and said venting hole (cf. Figure 9a). This bevel/chamfer can also be seen in Figures 1 and 6.

An alternative way of achieving this is by providing a layer with internal support structures 6c (cf. Figure 9b, bottom left) directly below the sheet material (cover element 6), so the disks 6a or sheets 6 are easy to press out during a venting event, but difficult to press in due to external forces. These internal support structures are preferably made out of a low heat resistance material like plastic, so that they can be easily destroyed by the heat of the cell venting products and prevent blocking of the venting channel. Said internal support structures 6c can be formed integrally with extensions 4a.

These support structures 6c need not be devised in cross-like fashion, as shown by mere way of example.

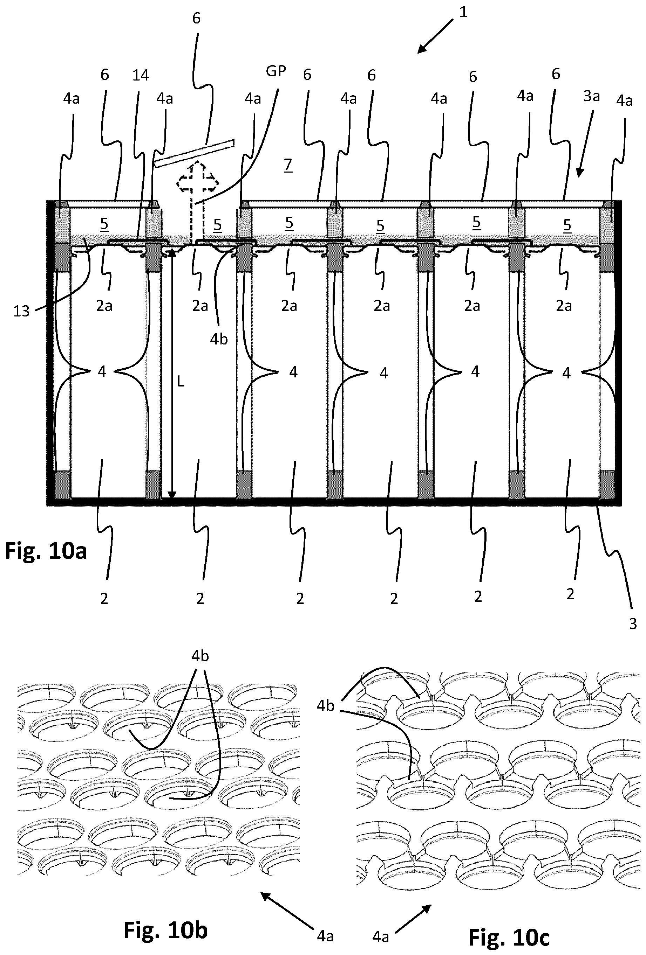

Figures 10a through 10c show an embodiment that is similar to that of Figure 1. In this embodiment, the top of the cells 2 is protected from the venting products of failed cells by a potting compound 13. Such a potting compound 13 can be present in the other embodiments of the invention, too.

In the shown embodiment, the axial extensions 4a can provide small gaps 4b (only one denoted for reason a clarity) between the cells 2 to enable an electrical connection (one exemplary connector denoted 14) of the cells 2 to each other. Preferably, these gaps 4b with the electrical interconnection are filled with the same potting compound 13 that is applied to the pole 2a of the cells 2 to create physically separated cell compartments, cf. Figure 10a. Alternatively, said gaps 4b can be formed in separating elements 4 (not shown).

Figures 10b and 10c provide a detailed view of the axial extensions 4a, i.e., the constituent elements (perforated panels with gaps 4b). Figure 10b is a top view while Figure 10c is a bottom view.

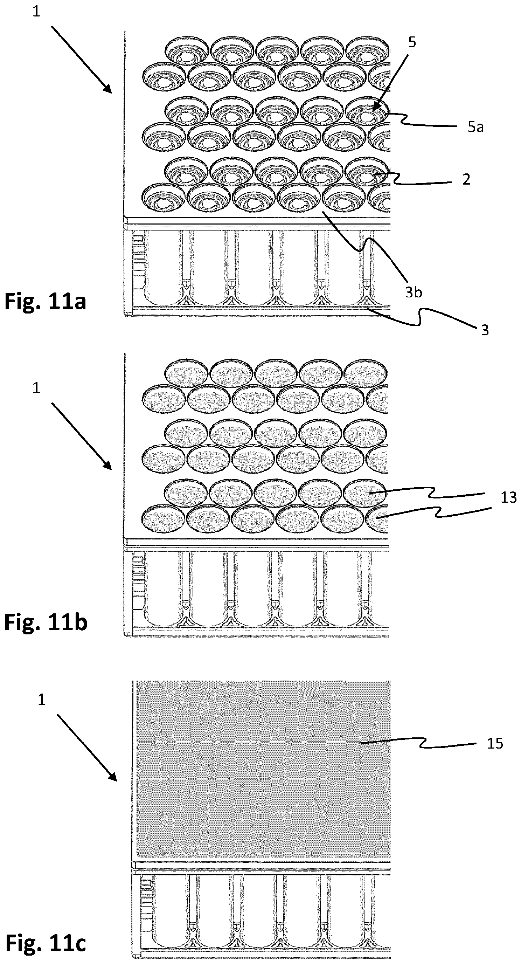

In a highly advantageous embodiment shown in Figures 11a through 11e, a sheet in the form of a thin metal sheet (e.g., aluminium, copper, steel or titanium of preferably less than 0.03mm thickness) is combined with a fire-resistant rigid burst disk or cap.

Figure 11a corresponds to Figure 3.

Figure 11b additionally shows the potting compound 13, as previously described with reference to Figure 10a.

In Figure 11c, said thin metal sheet 15 has been placed on top of element 3b, cf. Figure 11a. Said thin metal sheet or foil provides the ability to rip at less than 2 bar of internal pressure without complicated forming or pre-grooving, opening the previously environmentally sealed venting channel.

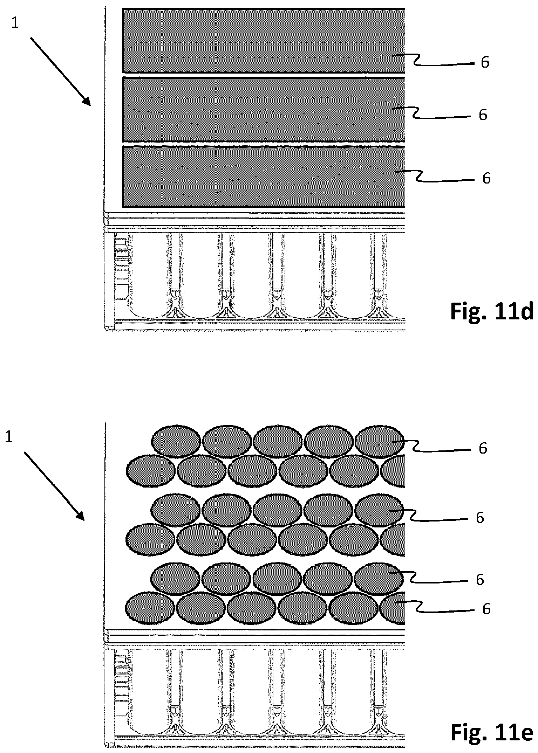

In Figure 11d, additional strip-like cover elements 6 have been added, as in Figure 7. Alternatively, individual cover elements 6 in the form of fire-resistant rigid burst disks or caps have been added in Figure 11e. This corresponds to the configuration of Figure 5. The burst disk or cap 6 protects the metal foil and the cell below from external mechanical damages, but is only loosely attached to the housing 3 (i.e., to element 3b, cf. Figure 11a) of the battery pack or the metal foil 15 (cf. Figure 11c), being therefore easily ejected during a cell venting event.

## Claims

1. A battery cell arrangement (1), comprising:
a plurality of battery cells (2);
at least one battery housing (3) enclosing said plurality of battery cells (2), said housing (3) having an opening (3a); and
a number of separating elements (4) that are located inside said battery housing (3) for separating individual battery cells (2) from each other; wherein
each battery cell (2) is associated with a respective vent channel (5), which vent channels (5) open to said opening (3a);
said vent channels (5) define a number of battery cell compartments, each of said compartments holding a subset of said plurality of battery cells (2) and each of said compartments being closed by a cover element (6), which cover element (6) is devised to open if a battery cell (2) in a corresponding compartment goes into thermal runaway and produces gaseous venting products (GP).

2. The battery cell arrangement (1) according to claim 1, wherein
a number of battery cells (2) in at least one subset is equal to one.

3. The battery cell arrangement (1) according to claim 1or 2, wherein
at least some of said separating elements (4) are devised for guiding gaseous venting products (GP) of the battery cells (2) towards said vent channels (5).

4. The battery cell arrangement (1) according to claim 3, wherein
at least some of said separating elements (4) have extensions (4a) that form said vent channels (5).

5. The battery cell arrangement (1) according to one of claims 1 through 4, wherein
said separating elements (4), said extensions (4a) when relying on claim 4 and/or said vent channels (5) are made of a fire-resistant or thermally insulating material.

6. The battery cell arrangement (1) according to one of claims 1 through 5, wherein
the housing (3) is devised in gas-tight manner.

7. The battery cell arrangement (1) according to one of claims 1 through 6, wherein
the housing (3) is located inside a gas-tight container (8), said container (8) having at least one venting port (8b).

8. The battery cell arrangement (1) according to claim 7, wherein
said container (8) comprises a free air volume (9) at least in a region around said housing (3).

9. The battery cell arrangement (1) according to one of claims 1 through 8, wherein
said cover element (6) is a sheet, a disk, a foil or the like, or a combination thereof, preferably made of metal, ceramic or glass.

10. The battery cell arrangement (1) according to one of claims 1 through 9, wherein
a sheet in the form of a thin metal sheet, e.g., aluminium, copper, steel or titanium, preferably of less than 0.03 mm thickness, is combined with a fire-resistant rigid burst disk or cap to form said cover element (6).

11. The battery cell arrangement (1) according to one of claims 1 through 10, wherein
a venting area of the battery cells (2), preferably an area around a pole (2a) of the battery cell (2) for cylindrical battery cells, is additionally covered by silicone or similar non-conductive thermally isolating potting compounds (13) to thermally and/or mechanically shield said subset of battery cells (2) from any neighbouring battery cells (2).

12. The battery cell arrangement (1) according to one of claims 1 through 11, wherein
said battery cells (2) are cylindrical cells and said vent channel (5) comprises a circular opening (5a), said battery cells (2) preferably facing said circular opening (5a) with their respective cell poles (2a).

13. The battery cell arrangement (1) according to one of claims 1 through 11, wherein
said battery cells (2) are prismatic cells or pouch cells.

14. The battery cell arrangement (1) according to one of claims 1 through 13, wherein
a plurality of housings (3) with corresponding battery cells (2) are arranged in one common gas-tight container (8).

15. An aircraft (10), in particular an electrically propelled aircraft, comprising the battery cell arrangement (1) according to one of claims 1 through 14, wherein preferably a venting port (8b) of the gas-tight container (8) opens to an outside of an aircraft fuselage (11).
